# EUROPEAN PATENT APPLICATION

(11) **EP 1 069 707 A1**
(43) Date of publication of application: **17.01.2001**
(21) Application number: 99401757.2
(22) Date of filing: 13.07.1999
(51) Int. Cl.: H04B 7/06, H04L 1/06

(54) **Transmit diversity transmitter and receiver for radio communications systems**

(71) Applicant: MOTOROLA, INC., Schaumburg, IL 60196 (US)
(72) Inventor: Clop, Oscar, 92260 Fontenay aux Roses (FR); Boixadera, Francesc, 92330 Sceaux (FR); Francisco, Max, Chez Aganahi Bontran, 93600 Aulnay sous Bois (FR)
(74) Representative: Kopacz, William James

(57) **Abstract**

A space time transmit diversity scheme using two antenna (9, 10) in which a data block of symbols (D22) is transmitted simultaneously with a complex conjugate of another block (D21*). With suitable receiver (15) processing, the symbols can be recovered with only a small complexity increase. The invention has a particular application to CDMA systems operating in TDD mode.

## Description

This invention relates to radio communication systems employing antenna arrays and has particular application to multi-carrier communications systems such as those employing code division multiple access (CDMA) techniques.

CDMA employs spread spectrum signaling whereby individual users in the communications network use the same RF carrier frequency, but are separated by the use of individual spreading codes. Hence, multiple communications channels are allocated using a plurality of spreading codes within the portion of radio spectrum, each code being uniquely assigned to a receiving station.

In some systems, one carrier frequency is allocated for communication on the downlink and another carrier frequency is allocated for communication on the uplink. This is known as FDD (frequency division duplex).

Another system uses a method known as time division duplex (TDD) in which the same carrier frequency is used for both uplink and downlink. A repeating time-frame structure is, in this case, divided into an interval with time slots used in the uplink direction and another interval with time slots used in the downlink direction.

Some systems are known which utilise knowledge of the propagation characteristics of the communication channel to adjust a characteristic of the transmission in order to achieve a more efficient use of the available resources. Most of these systems use feedback of information on the state of the link. Some systems which operate in TDD mode, use a calculated estimate of the propagation channel characteristics in one direction for adjusting a characteristic of the transmission in the other direction.

Thus an estimate of the characteristics of the downlink propagation channel from received uplink measurements can be derived.

The transmitting and receiving equipment may be fitted with single antenna or with an array of antenna elements.

Antenna arrays can provide improved performance relative to a single antenna by providing a better antenna pattern for a coverage area.

Furthermore, receive and transmit diversity schemes have been developed to optimise the receive and transmit path of communications systems employing antenna arrays. In one example, by varying the weight of the signals detected by each of the individual antennas in the array, it is possible to vary the antenna pattern to better detect signals from a particular direction or to arrange for nondestructive combination of multi-path signals. These techniques adjust the weights of the antenna array signals to maximise the receive path gain by measuring the output of a receiver.

Transmit diversity schemes can significantly improve the downlink performance of the so-called third generation systems or UMTS (universal mobile telecommunications system) which employ CDMA techniques. In particular, diversity techniques have been employed in order to improve the bit error rate (BER) performance of such systems. However, for a CDMA system operating in time duplex mode (TDD) (where the same carrier frequency is used for both uplink and downlink), this can lead to a significant increase in complexity of channel estimation at the mobile station.

The UMTS TDD mode uses TD-CDMA as multiple access technology. In this system, the receiving equipment uses interference cancellation techniques or joint detection to decode the communications signals.

In a CDMA system using direct-sequence spreading, the information-bearing signal is impressed upon a much more rapidly varying signal known as a spreading sequence. The increased frequency bandwidth of the spread signal provides immunity against narrowband interferers and spectral nulls in the frequency response of the propagation medium (frequency selective fading). In addition, the use of direct-sequence spreading allows a receiver to extract the information contained within a plurality, *K*, of independently spread user signals which simultaneously occupy the same frequency band.

Each of the *K* user signals consists of logical data bits (±1) which are mapped on to corresponding (possibly multi-valued) modulated symbols. The modulated symbols may be generated either in the form of a continuous stream or blocks of *N* symbols. Linear modulation schemes (such as *M*-ary quadrate amplitude modulation) are most commonly adopted in order to simplify receiver design. The modulated symbols of the *k*th user signal (*k*=1 ...k) are then spread by a *k*th spreading sequence (or code) which has a length of *Q* chips and repeats every symbol period. The *K* code sequences are chosen to be mutually orthogonal in order to facilitate separation of the *K* user signals at the receiver. Each of the *K* signals generated at the transmitter(s) then travels through its respective propagation channel before arriving at the receiver's detection stage. A propagation channel represents the composite effects of the transmit filters, air-interface and receive filters and can be identified by a filter with an impulse response of length *W* chips.

Propagation through the composite propagation channel results in two types of interference which need to be dealt with by the receiver's detection scheme:
**Intersymbol interference (ISI)** - The filtering effect of the composite propagation channel implies that symbols within each of the individual *K* spread signals interfere with their respective adjacent symbols. The ISI mechanism is identical to that observed in non-CDMA wireless systems (e.g GSM) where is is combatted via the process of equalisation.
**Multiple-access interference (MAI)** - The *K* code sequences are designed to be mutually orthogonal at the transmitter. However, propagation through the composite propagation channel implies that the codes are no longer orthogonal by the stage at which they arrive at the receiver. As a result of this non-orthogonality, symbols of the *K* spread signals interfere with one another, each acting as a source of noise towards others.

In circumstances where the length, *Q*, of the spreading sequences is significantly shorter than the length, *W*, of the composite propagation channel, the spreading codes are essentially mutually orthogonal at the receiver. In such cases the receiver can consist of a bank of *K* correlators (or matched filters) each matched to one of the *K* spreading signals. The output of the *k*^{th} matched filter then consists of noisy estimates of the modulated symbols carried by the *k*^{th} user signal.

In circumstances where the length, *Q*, of the spreading sequence is comparable with the length, *W*, of the composite propagation channel, the plurality of received signals are not mutually orthogonal. As a result the output of the *k*^{th} matched filter contains interference from the remaining *K-1* user signals. In order to eliminate this persisting MAI as well as the inevitable ISI, it is necessary to perform additional operations at the output of the matched filters. The combined operation of matched filtering and MAI-ISI elimination is referred to as joint-detection. Joint-detection schemes attempt to eliminate MAI and ISI by suppressing the mutual interference present amongst all the transmitted symbols carried by the *K* user signals. In a typical joint detection receiver, the receiver is provided with all the codes and is therefore able to decode all the channels within a given time slot.

One known method of estimating the unknown transmitted symbol sequence in a joint-detection receiver is zero-forcing block-linear equalisation. Normally, the joint-detection equations can be solved using propagation channel estimation and the knowledge of the spreading codes used.

This invention seeks to provide an open loop transmit diversity scheme, applicable to a CDMA communication system using short spreading sequences (e.g. UMTS TDD mode), without incurring a substantial complexity increase to the joint detection process.

A further aim is to provide a transmit diversity scheme which can be applied to a TD-CDMA communication system.

Accordingly, the present invention consists of a transmitter including at least first and second antennas for transmitting data blocks of symbols in a spread-spectrum communication system, including means for generating a complex conjugate of each data block, and being adapted to transmit simultaneously a first data block via the first antenna and a complex conjugate of a second data block via the second antenna.

The invention also provides a receiver, to be described here below, for decoding the data blocks transmitted in accordance with the invention.

The invention provides a benefit over an alternative transmit diversity system known to the inventors in which consecutive symbols are transmitted simultaneously with their complex conjugates. However, in this known case, if it is assumed that a multi-path propagation channel is present, there will be symbol overlap at the receiving end with the amount of overlap being dependent on the length of the impulse response of the propagation channel. In systems employing short spreading sequences e.g. the UMTS TDD mode, this symbol overlap has to be accounted for in the joint detection receiver. This means that in the receiving chain each joint detection will have to estimate the transmitted symbols and their conjugates. As joint detection requires the inversion of a matrix, the number of symbols to be detected is doubled and so the size of the joint detection matrix is doubled also. Therefore, the complexity of the matrix inversion is multiplied by 8.

In contrast, in the present invention over-lapping occurs only at the block edges. If the length of the blocks is chosen to be substantially longer than the length of the propagation channel, the effect of this over-lap is almost negligble.

Furthermore, the joint detection implemented at the receiver will only need to estimate the same amount of symbols as in the case of a single transmit antenna. Therefore, open loop transmit diversity gains can be obtained without a receiver complexity penalty because the size of the joint detection matrix does not have to be increased.

Some embodiments of the invention will now be described, by way of example only, with reference to the drawings of which;
Figure 1 is a block diagram of a known transceiver chain without incorporation of transmit diversity,
Figure 2 is a block diagram of a transceiver chain in accordance with the invention and including space time transmit diversity.

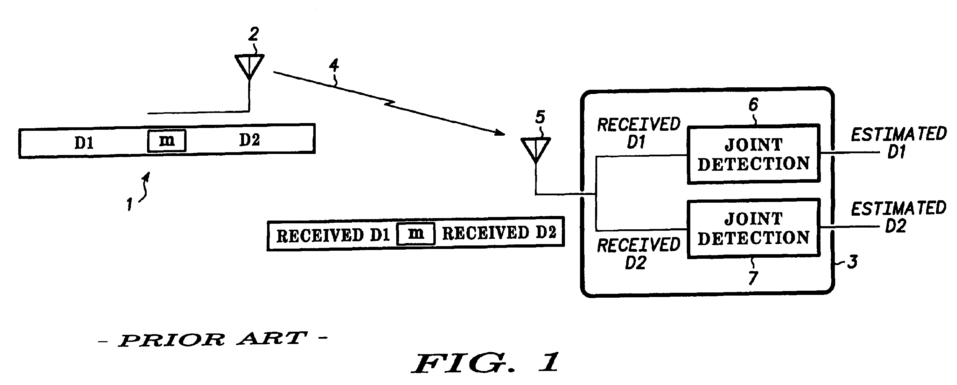

A typical TD-CDMA burst structure which is used to transmit information in each time-slot of a given frame is designated 1 in Figure 1.

Data to be transmitted by a single antenna 2 is split into two blocks D1 and D2 which are separated by a mid-amble training sequence M. The mid-amble is used at a receiver 3 to estimate the propagation channel 4.

In the known arrangement of Figure 1, the burst received at the single antenna 5 is decoded by two joint detection modules 6 and 7 with a first joint detection module 6 outputting an estimate of the data comprising D1 from the first part of the received burst and the joint detection module 7 outputting an estimate of the data comprising D2 from the second part of the received burst.

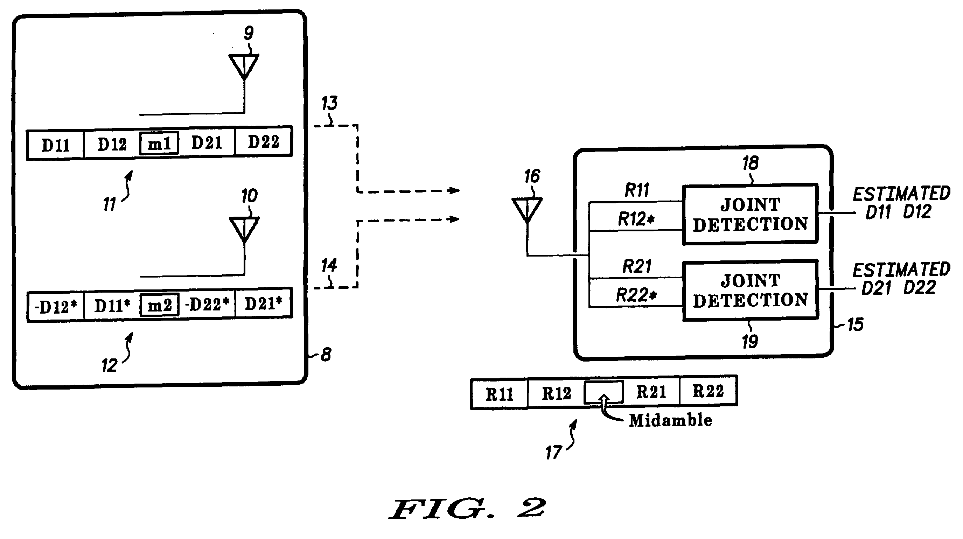

Figure 2 shows a TD-CDMA mode transceiver chain incorporating space time transmit diversity and operating in accordance with the invention.

A transmitter 8 is provided with two antennas 9 and 10 for transmitting two distinct bursts 11 and 12 simultaneously over two respective propagation channels 13 and 14. Each burst 11, 12 is provided with a respective mid-amble sequence M1 and M2 for the purposes of estimating the two channels 13 and 14 at a receiver 15 in accordance with known methods.

The data blocks to be transmitted (referred to as D1 and D2 in the known example of Figure 1) are each split in the transmitter into two sub-blocks D11 and D12 and D21 and D22 to form the first burst 11. The transmitter 8 is also adapted to generate the complex conjugates of each of these data sub-blocks to form the second burst 12 where this burst 12 comprises the sub-blocks - D12*, D11*, M2, -D22*, D21*, where the minus sign indicates the binary complement and the asterisk denotes the complex conjugate.

In operation, the transmitter 8 transmits in the first quarter of the frame comprising a burst (not counting the mid-amble sequence) and via the two antennas 9 and 10, sub-blocks D11 and -D12*. In the second quarter, it transmits data sub-blocks D12 and D11*. In the third quarter, it transmits data sub-blocks D21 and -D22*. In the fourth quarter it transmits data sub-blocks D22 and D21*.

At the receiver 15 a single antenna 16 receives the signals transmitted by both transmit antennas 9 and 10. The burst received 17 contains mixed information from both the antennas 9 and 10. Burst 17 comprises sub-blocks R11, R12, a midamble and sub-blocks R21 and R22. Each received sub-block contains mixed information contained within the corresponding sub-blocks transmitted in parallel by the transmitter 8 (via both antennas 9,10) and filtered by the two propagation channels 13, 14. In the receiver 15 a first joint detection module 18 processes data received during first and second quarters of the frame and from inputs comprising R11 and R12*, it estimates data blocks D11 and D12. A second joint detection module 19 processes data received during the third and fourth quarters of the frame and from inputs comprising R21 and R22* it estimates data blocks D21 and D22. Both joint detection modules 18 and 19 can be operated in accordance with known techniques.

Simulation results have shown that the invention provides a substantial gain in BER over TD-CDMA systems configured with no transmit diversity and also achieves gains comparable with other known diversity techniques.

In an alternative embodiment, the data blocks D1 and D2 of Figure 1 are divided into more than two sub-blocks. The performance of the invention is not degraded in this case provided that the sub-block length remains substantially longer than the length of the propagation channel.

Joint detection is not the only implementation of the receiver 15 and other options will be evident to those skilled in the art.

## Claims

1. A transmitter (8) including at least first and second antennas (9, 10) for transmitting data blocks (D11, D12, D21, D22) of symbols in a spread-spectrum communication system, including means for generating a complex conjugate of each data block (-D12*, D11*, - D22*, D21*) and being adapted to transmit simultaneously a first data block via the first antenna (9) and a complex conjugate of a second data block via the second antenna (10).

2. A transmitter (8) including first and second antennas (9, 10) and adapted to transmit a first burst (11) comprising first, second, third and fourth data blocks (D11, D12, D21, D22) via the first antenna (9), and a second burst (12), also comprising four data blocks (-D12*, D11*-D22*, D21*) simultaneously with the first burst (11) and via the second antenna (10), and wherein the transmitter (8) is further adapted to transmit, in sequence, the first data block (D11) via the first antenna (9) together with the binary complement of the complex conjugate of the second block (-D12*) via the second antenna (10), followed by the second data block (D12) via the first antenna (9) together with the complex conjugate of the first block (D11*) via the second antenna (10) followed by the third block - (D21) via the first antenna (9) together with the binary complement of the complex conjugate of the fourth block (-D22*) via the second antenna (10) followed by the fourth block (D22) via the first antenna (9) together with the complex conjugate of the third data block (D21*) via the second antenna (10).

3. A receiver (15) for receiving the first and second bursts (11, 12) transmitted in accordance with Claim 2 and including first and second joint detection modules (18, 19), said first module (18) being adapted to estimate the first and second data blocks (D11, D12) and the second module (18, 19) being adapted to estimate the third and fourth data blocks (D21, D22).
